# EUROPEAN PATENT SPECIFICATION

(11) **EP 2 365 663 B1**
(45) Date of publication and mention of the grant of the patent: **21.09.2016**
(21) Application number: 11156825.9
(22) Date of filing: 03.03.2011
(51) Int. Cl.: H04L 12/28

(54) **Traffic allocation into wide area networks**
Verkehrs-Zuweisung in WANs
Affectation de trafic dans des réseaux étendus

(30) Priority: 03.03.2010 ES 201030309
(43) Date of publication of application: 14.09.2011
(73) Proprietor: Vodafone Group PLC, Newbury Berkshire RG14 2FN (GB); Vodafone España, S.A.U., 28108 Alcobendas (ES)
(72) Inventor: Zas Couce, Luis, E-28050, Madrid (ES); Dominguez Romero, Francisco, E-28050, Madrid (ES); De Pasquale, Andrea, E-28050, Madrid (ES)
(74) Representative: Boult Wade Tennant

(56) References cited:
- EP-A2- 1 786 151
- WO-A1-2005/055524
- US-A1- 2006 126 613

## Description

### TECHNICAL FIELD OF THE INVENTION

The present invention relates to a method and a device for traffic allocation of a user terminal using a home gateway to Digital Subscriber Line (DSL) home (wireless or wired) networks and wide area mobile networks.

### BACKGROUND OF THE INVENTION

Most of mobile network operators are nowadays able to provide the customers with data accessibility via either Radio Networks (e.g., 2G, 3G and beyond 3G networks) or via ADSL (Asymmetric Digital Subscriber Line). Today, mobile network operators provide consumer gateway devices, often called Home routers or Home/Residential Gateways (HG), which are being installed in customer premises in order to ensure continuity between the home local area network (LAN) with the in-home connected devices and the external world represented by a wide area network (WAN). The user in home and SOHO (single office/home office) can connect his/her different devices such as fixed and mobile telephones, fixed and portable computers, fax machines or any other user terminal equipment (TE) of telecommunication to the HG. The WAN connectivity to the TE using the HG may be provided through (A)DSL, a cable modem, or a broadband mobile phone technology (2G, 3G, LTE or beyond). Currently, the HG allows the TE to connect to the internet *either* via ADSL (the preferred and defaults solution) or via Radio in cases where the ADSL line is not active yet or is temporarily not working.

Actually, the HG can relay the user traffic through a primary path to an ADSL network or, in case the primary path fails, through a secondary path to a Mobile Network. Each path of the HG has a different public source IP address assigned. On the other hand, the HG allocates one private IP to every connected TE. There are as many IP destination addresses as connections with the user and these addresses are provided by the DNS (Domain Name System).

However, the capacity of the ADSL path (either in Uplink or in Downlink) can be insufficient to handle all the voice and data traffic generated by a user, whilst a free capacity can be available over the Radio link (e.g., 3G radio resources) of the Mobile Network providing coverage to the Home Gateway. Then, the current situation is that ADSL capacity cannot be increased and the 3G connection is only used as a back-up in case the ADSL is not available.

EP1786151A2 describes an access point supporting a plurality of data paths from the access point to the Internet backbone.

### SUMMARY OF THE INVENTION

The present invention serves to solve the aforesaid problem by offloading at least part of the DSL traffic from a user connected to a home gateway (HG) into a public land mobile network (PLMN) in cases where the radio link of connection with the HG has available capacity (bandwidth) in which to allocate the traffic.

In the switching process of user traffic from one path of the HG to the other one (ADSL and radio paths with their IP addresses, IP1 and IP2, assigned respectively by a DNS which, in a initial configuration stage of the HG, communicates with the HG in reply of its IP address allocation request), the existing TCP and IP mechanisms for session establishment are reused by the HG so that access resources and time can be optimised.

Having a user generating traffic through one or more user terminals (TEs) which connect to the HG, having each TE a private IP address allocated by the HG, this HG is capable of choosing to carry part of the user traffic with IP1 and the other part with IP2, translating these two IP addresses from the private IP address allocated to the TE being source of the traffic.

Thus, a major advantage of present invention is that the spare capacity on the mobile networks to which a HG can connect can be optimally employed in order to boost the user experience with the HG.

In accordance with one aspect of the invention there is provided a method for allocating traffic of terminal equipment (TE) connected to a home gateway (HG), in accordance with claim 1.

In addition, this gateway device is capable of establishing the transport session at a state (Single IP state or at a Dual IP state) selected by comparing a measured quality parameter of the mobile PS connection with a second (configurable) threshold. If the measured value is below the threshold, the transport session is established by the HG at a Dual IP state and traffic of the transport session is allocated to IP1 (the IP address of the mobile PS connection). Otherwise, the traffic is allocated to the initially available IP address: IP2 of the DSL connection.

The HG can obtain the measured quality parameter of the mobile PS connection by several techniques: in terms of load, by measuring a received downlink power and determining maximum and minimum downlink power values received in a previous time period which is configurable; in terms of thoroughput, by setting up a FTP service on the mobile PS connection and measuring an average download rate in a time period which is configurable, or trying a call set-up on the mobile PS connection and simply waiting for a positive or negative reply from the mobile network. In the latter case (call set-up trial), the mobile network first analyzes (measures or estimates) its own current load, then determines whether the current load is low enough so that the user of the HG can get benefit from a second connection and, depending upon this load evaluation, finally the mobile network either accepts the call set-up (and sends positive reply to the HG) or rejects the call set-up trial (and sends negative reply to the HG).

In the context of the invention, throughput is the amount of data that can flow through the connection (DSL or Radio) in a given time period. DSL latency is defined as a delay time involving propagation and transmission delays (due to properties of the physical medium) and processing delays (such as passing through proxy servers or making network hops on the Internet). On DSL connections, latencies of less than 100 milliseconds (ms) are typical and less than 25 ms desired.

The measured quality parameter of the DSL connection can be DSL latency, or a DSL load utilization, which is a ratio of a measured current throughput versus a maximum achievable throughput of the DSL connection, or being determined by measuring a maximum achieved throughput both in the uplink and downlink of the DSL connection over repeated time periods or using a speed test or a value of maximum throughput fixed in a user profile.

The establishment of the transport session by the HG, when being at Dual IP state and in a possible implementation option, comprises activating a PDP context, with IP1 as the IP address, simultaneously to the decision of carrying traffic with IP1. Another option consists of activating the PDP context with the IP address IP1 every certain time period and its activation is before the decision of carrying traffic IP1. A last alternative is the radio bearer allocation just when the HG decides to allocate traffic to the IP address (IP1) of the mobile PS connection.

When there is traffic allocated to both available IP addresses (IP1, IP2), at least part of the traffic allocated to IP2 is reallocated from the DSL connection to the IP1 of the mobile PS connection, only if the measured quality parameters of the DSL connection and the mobile PS connection are below a minimum threshold previously configured.

Another possibility of configuration is associated the traffic to a low priority parameter of QoS, which is the priority used by the mobile network if there is traffic allocated to the IP address of the mobile PS connection.

In the case that radio bearers are allocated the mobile PS connection but there is no traffic allocated to IP1, the step of the transport session establishment comprises returning the HG to Single IP state (20) after releasing these radio bearers and/or the PDP context.

Another aspect of the invention deals with a gateway device which comprises a DSL modem and a radio modem for connection to a PLMN (2G, 3G or beyond 3G mobile network) and processing means for performing the method described before, constituting a Home Gateway (HG) for connection with one or more different user terminals through wired (e.g., USB) or wireless (e.g., Bluetooth) interface(s).

This gateway device is capable to support both a connection to the WAN which is a PLMN (e.g., a 3G connection) and a connection with a DSL network (e.g., connected to the PSTN). Thus, the HG is capable to evaluate the quality parameters of both connections and, based on the evaluation, the HG uses either the DSL connection to transmit the calls from at least one of the connected user terminals or the PLMN to transmit part of the call traffic or all the traffic from the connected user terminals.

A last aspect of the invention deals with a computer program comprising program code means which execute the method described before, when loaded into processing means of a home gateway connectable to terminal equipments and connectable to DSL and mobile networks.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1 shows a home gateway connected to in-home terminal equipment and to the external world via connections to a wide area mobile network and a fixed network through DSL, according to a possible embodiment of the invention.
Figure 2 shows a state diagram of the method for allocating traffic from the terminal equipment through the home gateway to the external networks, according to a preferred embodiment of the invention.
Figure 3 shows a state diagram of the method for allocating traffic through the home gateway switching from an initial state of a single IP address for traffic allocation to a state of dual IP address for traffic allocation, according to a preferred embodiment of the invention.
Figure 4 shows a state diagram of the method for allocating traffic through the home gateway switching from the dual IP state to the single IP state, according to the preferred embodiment of the invention.
Figure 5 shows a state diagram of the method for allocating traffic of new TCP or UDP sessions through the home gateway when is at the dual IP, according to the preferred embodiment of the invention.
Figure 6 shows a state diagram of the method for allocating traffic of the ongoing mobile network TCP or UDP sessions through the home gateway when is at the dual IP, according to the preferred embodiment of the invention.

### DETAILED DESCRIPTION OF THE INVENTION

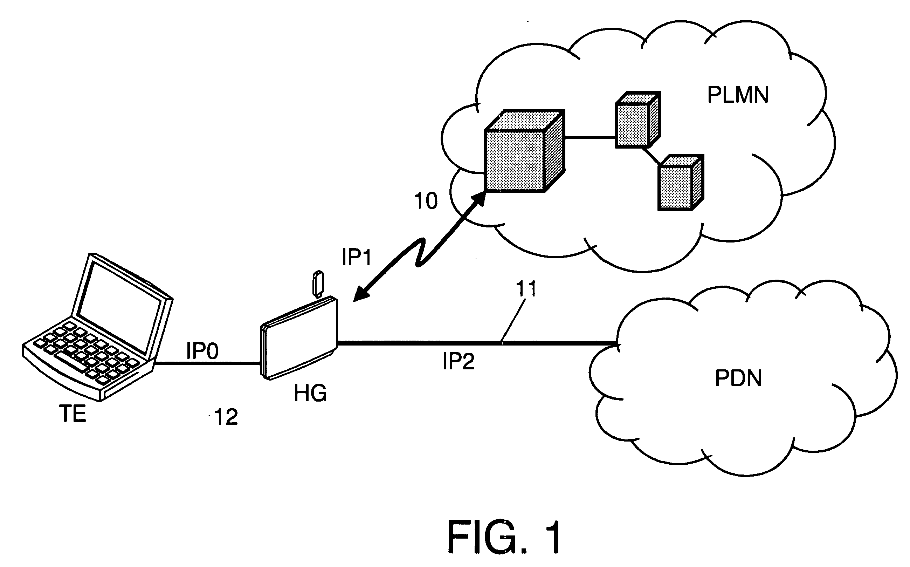

Figure 1 shows a home gateway HG with a mobile PS connection 10 to a cellular telecommunications network or mobile network PLMN (e.g., 3G network) through a node (Node-B in 3G) of the radio access network and with an DSL connection 11 to a packet data network PDN (internet or intranet). The mobile PS connection 10 is identified by a public IP address IP1 and the DSL connection 11 is identified by another different public IP address IP2. A user terminal TE is connected to the home gateway HG through an access interface 12, such as USB, Bluetooth, wifi, Ethernet ..., ..., and with a private IP address IP0 allocated by the home gateway HG to its connection with the user terminal equipment TE. From now own, 3G Radio Access Bearer is used as an example of Radio Bearer for mobile PS connection 10.

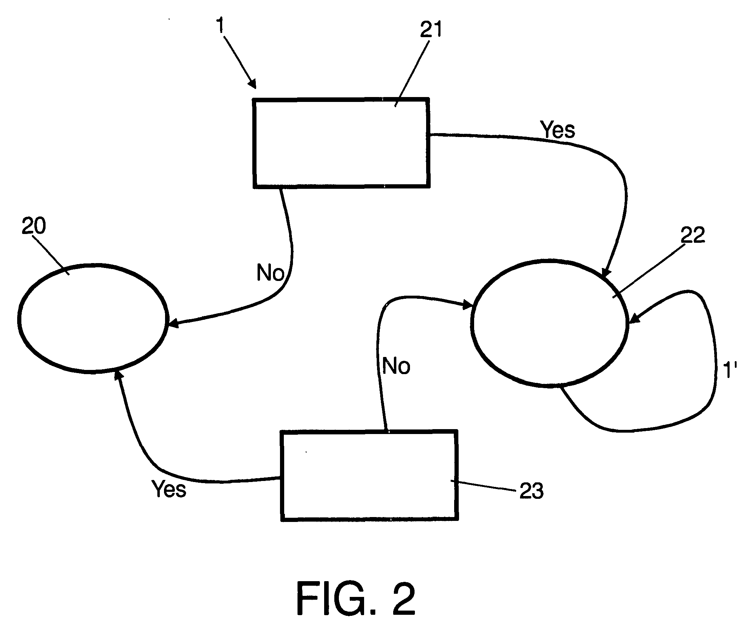

The Home Gateway HG can be described as a state machine shown in Figure 2, which can move from a Single IP state 20, wherein the DSL connection 11 is the only one available to carry user traffic from the terminal equipment TE, into a Dual IP state 22 wherein both the DSL connection 11 and mobile PS connection 10 are available to share the user traffic load.

When a new TCP or UDP session 1 has to be established by the Home Gateway HG in order to handle a voice/data call from the terminal equipment TE, firstly the Home Gateway HG enter into a evaluation of state change from single to dual state 21.

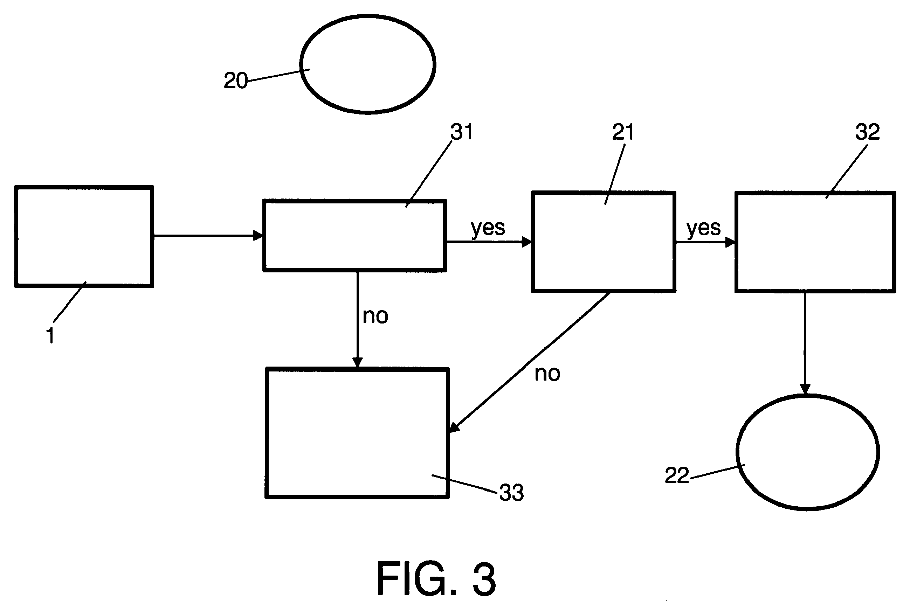

Figure 3 shows the steps followed by the Home Gateway HG in its initial state, i.e., Single IP state 20, in order to decide whether change to Dual IP state 22 or not. First, an evaluation 31 of the DSL connection 11 is performed in order to detect the potential benefit of off-loading the DSL connection 11 switching ADSL traffic at least partially by opening the new TCP or UDP session 1 over the mobile PS connection 10. There are different criteria which can be used for this evaluation 31: a preferred criterion is ADSL load utilization, another one could be latency time on the DSL connection 11 (measured as FEC/Interleave). Once the DSL connection 11 has been evaluated for both Uplink and Downlink, if its utilization is higher than a X% of the maximum achievable ADSL throughput (the threshold can be exceeded in either Uplink either Downlink or both), a potential benefit from ADSL offload is identified and the answer returned by the evaluation 31 is YES and the Home Gateway HG passes to execute the next step or function, explained below, which is the evaluation of state change from single to dual state 21.

The evaluation of state change from single to dual state 21 comprises establishing an active PDP context in the Core Network and an active Radio Bearer, so that the Home Gateway HG can have a second path with a second public IP address to be used in order to send and receive data. The PDP context establishment can be run together with each Radio Bearer allocation or can be done periodically, every x hours, in order to ensure that a second public IP address is available. Another possible implementation of this function involves performing the Radio Bearer set-up when there is the need of carrying traffic over the Radio Network. The main principle of the Radio Bearer set-up is that it can be established when the following conditions are verified:
- The previous evaluation 31 for detecting potential ADSL off-load has been executed and has shown advantages in opening a new connection.
- The Mobile Network load is considered low enough so that there is an expectation that the sessions established mobile PS connection 10 can experience a better quality (e.g., throughput or delay) than competing with the ongoing applications for capacity over the DSL connection 11.

The mobile Network load can be evaluated with different algorithms, to name but a few:
- Trying a call set-up and waiting for a positive answer from the RNC, provided that the load evaluation for the 3G link establishment in an ADSL offload situation is analyzed by the RNC. If the answer is positive the 3G link is established for ADSL off-load onto the mobile PS connection 10.
- Carrying measurements on the Received downlink power over the chosen 3G carrier and comparing the measured Received downlink power with the maximum and lowest Received downlink power detected by the Home Gateway HG in a pre-configured time period (e.g., several previous days).
- Testing a 3G connection by establishing a 3G connection and an FTP service towards a predefined server and then measuring the average download rate over a period of X seconds, which is compared over a predefined minimum threshold; if the download tests is higher than the threshold, the 3G network is considered empty enough to carry this connection.

In case that the answer from the evaluation of state change from single to dual state 21 is YES, the new TCP or UDP session 1 is requested to the RNC with the PDP context established in the Core Network and the setup Radio Bearer of the mobile network PLMN, so that the Home Gateway HG enters the Dual IP state 22 and can allocate 32 call traffic from the private IP address IP0 of the terminal equipment TE to the assigned IP address IP1 of the mobile PS connection 10. On the contrary, when the evaluation of state change from single to dual state 21 returns a negative answer, meaning that there is no benefit in opening the second path provided by the mobile PS connection 10, the traffic of the new TCP or UDP session 1 from the IP address IP0 keeps on being allocated 33 to the IP address IP2 of the DSL connection 11.

For traffic allocation on the mobile PS connection 10, the Home Gateway HG establishes a 3G link for ADSL offload. In such case, the 3G link set-up for ADSL offload uses a special Quality of Service (QoS profile) with has a very low value of the priority parameter. This priority value is configured in the Home Location Register (HLR) of the mobile network when the HLR receives trough special scripts the indication that the Home Gateway HG which is requesting the 3G connection has an ADSL link active. Then, the Radio Network Controller (RNC) opens a normal 3G connection using said QoS traffic profile which received from the Core Network. Optionally, the RNC can use this special QoS traffic profile in order to identify a Home Gateway device and can decide to proceed with the call set-up only if the Cell resources (transmission power, Code Usage, Baseband and lub) are all below a minimum threshold configured in the RNC for the Home Gateway HG set-up. Note that if the ADSL line fails, the priority of the Home Gateway HG as a 3G device is then updated normally, the RNC handling the Home Gateway HG as any other customer.

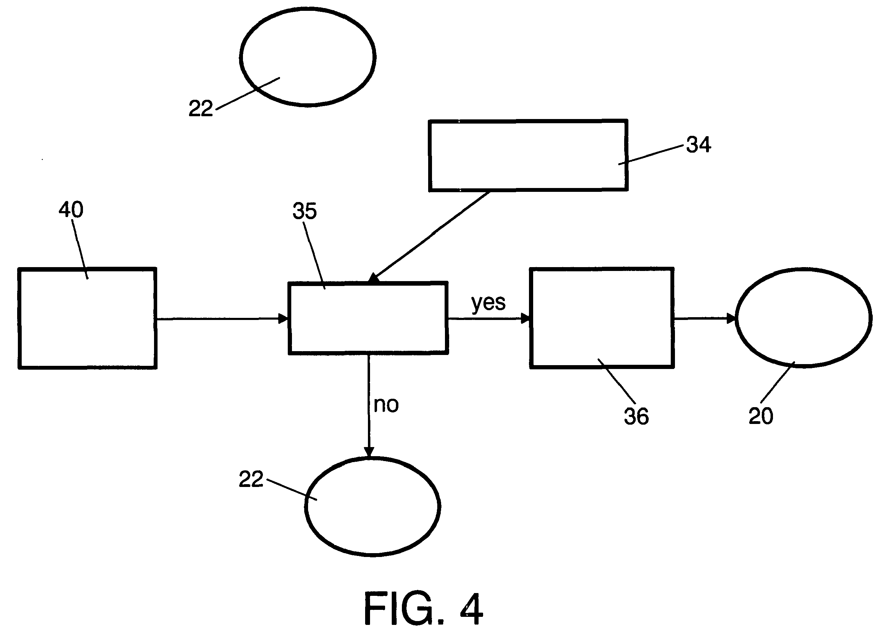

Once the Home Gateway HG is at the Dual IP state 22, a periodical state check is executed as shown in Figure 4. First, taking into account the old TCP/UDP session 40 (no calls from IP0 are incoming at the current state), a load evaluation 34 on the mobile PS connection 10 is performed. If the traffic carried over the mobile PS connection 10 is zero, a state change from dual to single evaluation function 35 is executed. This state change evaluation function 35 checks the ADSL utilization so that it can compare said utilization of the DSL connection 11 with a threshold configured in Home Gateway HG and if it is lower than the configured threshold, the 3G radio bearer is released by a 3G disconnection function 36. The evaluation 34 monitors the quality of the mobile PS connection 10 in order to decide whether it has to be disconnected (because no 3G traffic is further carried over) by the 3G disconnection function 36 and to trigger an IP selection function 37 to decide whether IP1 (3G link) or IP2 (ADSL link) is used for ongoing and new TCP/UDP sessions. The quality of the mobile PS connection 10 can be monitored by the load evaluation 34 function in different ways, for example, using the 3G link throughput, both the instantaneous throughput (which gives the maximum potential throughput that can be achieved by the 3G link) measured in a Transmission Time Interval basis (TTI = 2 milliseconds) and an average throughput achieved during the last Y seconds. In order to decide whether the mobile PS radio bearer must be released, i.e, for the 3G disconnection function 36, the average throughput is monitored by the 3G load evaluation 34 and if this throughput is below a configurable threshold, the 3G connection is considered useless and so the Home Gateway HG enter a mobile PS disconnection phase. For the IP selection function 37, both measurements are reported.

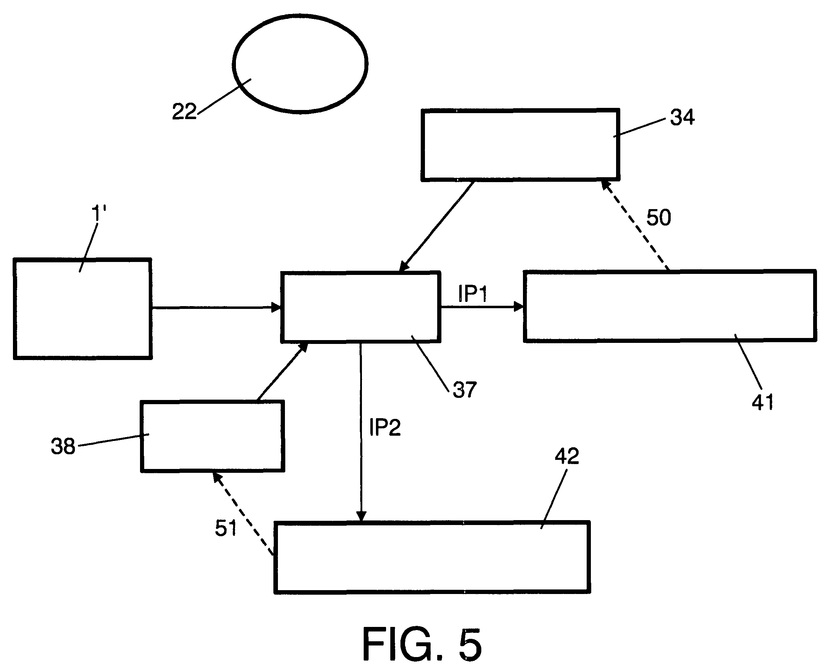

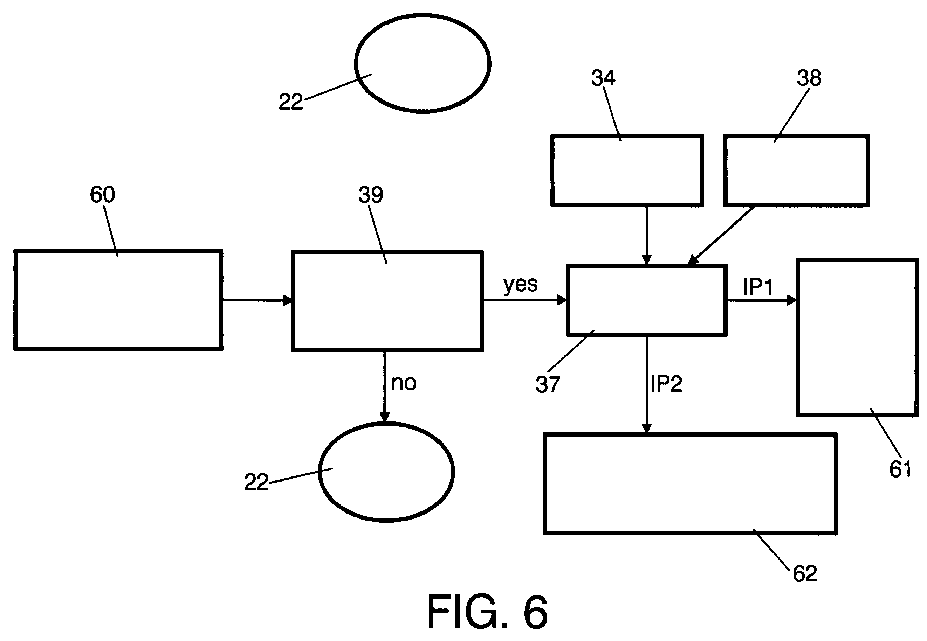

The IP selection function 37 is shown in Figures 5 and 6. Its result can be either IP1, which means the mobile PS connection 10 is used to carry the ongoing or new traffic, either IP2 if the DSL connection 11 returns to be the preferred path to carry the current traffic. There are two inputs for this IP selection function 37:
- The average and instantaneous throughput values of the mobile PS connection 10 reported by the load evaluation 34.
- The maximum achievable throughput on the DSL connection 11 and the actual ADSL utilization (ratio of the current ADSL link throughput vs. said achievable maximum).

The maximum achievable ADSL throughput can be determined by the Home Gateway HG in several ways, for example:
- by a speed test executed (e.g., through a website, for instance, speedtest.com) during the set-up stage (initial configuration process) of the Home Gateway HG,
- through a static parameter (maximum throughput) based on the user (subscription) profile (fixed value set by the network operator),
- dynamically updated by measuring over the time the maximum achieved Downlink and Uplink throughput.

For a new TCP/UDP session 1', the IP selection function 37, shown in Figure 5, determines if the ADSL utilization is below a certain threshold and if so, the new TCP/UDP session 1' is allocated to the IP2 address of the DSL connection 11. Otherwise, the IP selection function 37 checks the bandwidth available on the DSL connection 11 (by computing, though an ADSL load evaluation function 38, the maximum throughput minus the utilized throughput in real-time) and compare it with the available throughput (instantaneous minus the average used) the mobile PS connection 10, in order to choose the IP address of the path with the highest bandwidth available currently to carry the traffic within the new TCP/UDP session 1'.

Therefore, the resulting IP address of the IP selection function 37 indicates the path to be used for the new sessions but also determines whether the ongoing 3G sessions are kept in 3G or moved to ADSL. When a new TCP/UDP session 1' is finally allocated to an IP address selected from IP1 or IP2, the 3G load evaluation 34 and the ADSL load evaluation 38 functions are updated accordingly, evaluation updates 50 and 51 respectively.

Keeping on the Dual IP state 22, for ongoing TCP/UDP session 60 open over the 3G radio bearer, the IP selection function 37, shown in Figure 6, checks whether the average throughput of the mobile PS connection 10 is lower than a minimum threshold. In addition, the IP selection function 37 uses the return from the ADSL load evaluation 38 and compares the result of the ADSL utilization with another minimum threshold. In case that both the average throughput of the mobile PS connection 10 and the ADSL utilization are lower than their respective minimum thresholds, then the revertible traffic with IP1 (the traffic of the ongoing TCP/UDP session 60 in the 3G link which can be reallocated to another IP address) is switched from the mobile PS connection 10 to DSL connection 11 with IP2.

Before carrying out the IP selection function 37 with the ongoing TCP/UDP session 60, the Home Gateway HG performs a traffic assessment 39 in order to identify the traffic of the ongoing TCP/UDP session 60 which can be considered as "revertible". Every service (univocally identified by the TCP/UDP port number previously assigned to each type of service) has to be classified as revertible or non revertible. Basically the revertible services are those that are able to reset the TCP/UDP session if the IP address change (although there can be some retransmissions), for example, the e-mule P2P application is able to retry in case the connection is broken. The services are classified per TCP/UDP port as revertible or no revertible in a table loaded in the Home Gateway HG, which can be upgradeable remotely.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for allocating traffic of terminal equipment (TE) connected to a home gateway (HG), comprising:
- connecting the home gateway (HG) to a DSL network through a DSL connection (11) with a IP address (IP2),
- configuring the home gateway (HG) in an initial state which is a Single IP state (20) at which the IP address (IP2) of the DSL connection (11) is the only one available for traffic allocation,
- connecting the home gateway (HG) to a cellular telecommunications network through a mobile PS connection (10) with a IP address (IP1) which is different from the IP address (IP2) of the DSL connection (11),
- measuring a quality parameter of the DSL connection (11) both in uplink and downlink when a transport session request arrives at the home gateway (HG),
- measuring a quality parameter of the mobile PS connection (10);
- determining whether the home gateway (HG) establishes the transport session in the Single IP state (20) or in a Dual IP state (22), the Dual IP state being a state where the IP address (IP1) of the mobile PS connection (10) and the IP address (IP2) of the DSL connection (11) are both available for traffic allocation and where traffic is allocated to both available IP addresses (IP1, IP2), at least part of the traffic allocated to IP2 being reallocated from the DSL connection to the IP1 of the mobile PS connection,
said determining step including comparing the measured quality parameter of the DSL connection with a first threshold and comparing the mobile PS connection with a second threshold and switching to the Dual IP state if the measured quality parameters are below their respective thresholds.

2. The method according to claim 1, further comprising:
wherein the determining step further includes allocating the traffic to the Single IP state where the measured quality parameter of the mobile PS connection is above the second threshold.

3. The method according to claim 2, wherein the measured quality parameter of the mobile PS connection (10) is a value of load obtained by the home gateway (HG) by measuring a received downlink power and determining maximum and minimum downlink power values received in a previous time period which is configurable, and if the measured quality parameter of the mobile PS connection (10) is below the configurable threshold to which is compared, the home gateway (HG) establishes the transport session at the Dual IP state (22).

4. The method according to claim 2, wherein the measured quality parameter of the mobile PS connection (10) is a value of throughput obtained by the home gateway (HG) by setting up a FTP service on the mobile PS connection (10) and measuring an average download rate in a time period which is configurable, and if the measured quality parameter of the mobile PS connection (10) exceeds the configurable threshold to which is compared, the home gateway (HG) establishes the transport session at the Dual IP state (22).

5. The method according to claim 2, wherein the measured quality parameter of the mobile PS connection (10) is obtained by the home gateway (HG) by trying a call set-up on the mobile PS connection (10) and waiting for a reply, selected from a positive reply and a negative reply, from the cellular telecommunications network.

6. The method according to claim 5, wherein, after trying a call set-up on the mobile PS connection (10), the cellular telecommunications network accepts the call set-up and sends positive reply to the home gateway (HG) only if current load in the cellular telecommunications network is lower than a determined threshold indicating that a second connection for the terminal equipment (TE) on the mobile PS connection (10) of the home gateway (HG) is allowable; otherwise, so that can get benefit from and, depending upon this load evaluation, finally the cellular telecommunications network rejects the call set-up and sends negative reply to the home gateway (HG).

7. The method according to any of claims 2-6, wherein establishing the transport session by the home gateway (HG) at a Dual IP state (22) comprising activating a PDP context with the IP address (IP1) of the mobile PS connection (10) and the PDP context is activated simultaneously to the determination through the comparison of the measured quality parameter of the mobile PS connection (10) with the configurable threshold of allocating traffic to the IP address (IP1) of the mobile PS connection (10).

8. The method according to any of claims 2-6, wherein establishing the transport session by the home gateway (HG) at a Dual IP state (22) comprising activating periodically a PDP context with the IP address (IP1) of the mobile PS connection (10) and the PDP context is activated before the determination through the comparison of the measured quality parameter of the mobile PS connection (10) with the configurable threshold of allocating traffic to the IP address (IP1) of the mobile PS connection (10).

9. The method according to any of claims 2-6, wherein establishing the transport session by the home gateway (HG) at a Dual IP state (22) comprising requesting a radio bearer for carrying traffic with the IP address (IP1) of the mobile PS connection (10) when determining through the comparison of the measured quality parameter of the mobile PS connection (10) with the configurable threshold that traffic is allocated to the IP address (IP1) of the mobile PS connection (10) and having an activated PDP context always open.

10. The method according to any of claims 2-9, wherein, if there is traffic allocated to the IP address (IP1) of the mobile PS connection (10) and traffic allocated to the IP address (IP2) of the DLS connection (11), at least part of the traffic allocated to the IP address (IP2) of the DLS connection (11) is reallocated to the IP address (IP1) of the mobile PS connection (10) depending on a comparison of the measured quality parameters of the DSL connection (11) and the mobile PS connection (10) with a configured minimum threshold.

11. The method according to any of claims 2-10, wherein, if there is traffic allocated to the IP address (IP1) of the mobile PS connection (10), the traffic is assigned to a low priority parameter of QoS used by the cellular telecommunications network.

12. The method according to any of claims 2-11, wherein, if no traffic is allocated to the IP address (IP1) of the mobile PS connection (10) and radio bearers are allocated the mobile PS connection (10), establishing the transport session by the home gateway (HG) comprising releasing the radio bearers and returning the home gateway (HG) to Single IP state (20).

13. The method according to any preceding claim, wherein the measured quality parameter of the DSL connection (11) is a DSL load utilization which is a ratio of a measured current throughput of the DSL connection (11) versus a maximum achievable throughput of the DSL connection (11).

14. The method according to any of claims 1-12, wherein the measured quality parameter of the DSL connection (11) is a DSL latency.

15. A Gateway device for allocating traffic into wide area networks comprising:
- connection means for connecting to at least one Terminal Equipment (TE),
- connection means for connecting to a DSL network (PDN),
- connection means for connecting to a cellular telecommunications network, **characterized by** further comprising:
- processing means configured for performing the method for allocating traffic defined in accordance to any preceding claim.

## Patentansprüche

1. Verfahren zum Zuweisen von Datenverkehr von mit einem Home-Gateway (HG) verbundenen Endgeräten (TE), das Folgendes beinhaltet:
- Verbinden des Home-Gateway (HG) mit einem DSL-Netzwerk durch eine DSL-Verbindung (11) mit einer IP-Adresse (IP2),
- Konfigurieren des Home-Gateway (HG) in einem Anfangszustand, der ein Einzel-IP-Zustand (20) ist, an dem die IP-Adresse (IP2) der DSL-Verbindung (11) die einzige zur Datenverkehrszuweisung verfügbare ist,
- Verbinden des Home-Gateway (HG) mit einem zellularen Telekommunikationsnetz durch eine mobile PS-Verbindung (10) mit einer IP-Adresse (IP1), die sich von der IP-Adresse (IP2) der DSL-Verbindung (11) unterscheidet,
- Messen eines Qualitätsparameters der DSL-Verbindung (11) sowohl in der Uplink als auch in der Downlink, wenn eine Transportsitzungsanforderung am Home-Gateway (HG) ankommt,
- Messen eines Qualitätsparameters der mobilen PS-Verbindung (10);
- Bestimmen, ob das Home-Gateway (HG) die Transportsitzung im Einzel-IP-Zustand (20) oder in einem Dual-IP-Zustand (22) einrichtet, wobei der Dual-IP-Zustand ein Zustand ist, in dem die IP-Adresse (IP1) der mobilen PS-Verbindung (10) und die IP-Adresse (IP2) der DSL-Verbindung (11) sowohl für Datenverkehrszuweisung als auch für Fälle zur Verfügung steht, in denen Datenverkehr beiden verfügbaren IP-Adressen (IP1, IP2) zugewiesen wird, wobei wenigstens ein Teil des IP2 zugewiesenen Datenverkehrs von der DSL-Verbindung der IP1 der mobilen PS-Verbindung neu zugewiesen wird,
wobei der genannte Bestimmungsschritt das Vergleichen des gemessenen Qualitätsparameters der DSL-Verbindung mit einer ersten Schwelle und das Vergleichen der mobilen PS-Verbindung mit einer zweiten Schwelle und das Umschalten in den Dual-IP-Zustand beinhaltet, wenn die gemessenen Qualitätsparameter unter ihren jeweiligen Schwellen sind.

2. Verfahren nach Anspruch 1, das ferner Folgendes beinhaltet:
wobei der Bestimmungsschritt ferner das Zuweisen des Datenverkehrs zum Einzel-IP-Zustand beinhaltet, wo der gemessene Qualitätsparameter der mobilen PS-Verbindung über der zweiten Schwelle liegt.

3. Verfahren nach Anspruch 2, wobei der gemessene Qualitätsparameter der mobilen PS-Verbindung (10) ein Lastwert ist, der vom Home-Gateway (HG) durch Messen einer empfangenen Downlink-Leistung und Bestimmen von maximalen und minimalen Downlink-Leistungswerten erhalten wird, die in einer vorherigen Zeitperiode empfangen wurden, die konfigurierbar ist, und wenn der gemessene Qualitätsparameter der mobilen PS-Verbindung (10) unter der konfigurierbaren Schwelle ist, mit der er verglichen wird, das Home-Gateway (HG) die Transportsitzung im Dual-IP-Zustand (22) einrichtet.

4. Verfahren nach Anspruch 2, wobei der gemessene Qualitätsparameter der mobilen PS-Verbindung (10) ein Wert von Durchsatz ist, der vom Home-Gateway (HG) durch Einrichten eines FTP-Service auf der mobilen PS-Verbindung (10) und Messen einer durchschnittlichen Download-Rate in einer konfigurierbaren Zeitperiode erhalten wird, und das Home-Gateway (HG), wenn der gemessene Qualitätsparameter der mobilen PS-Verbindung (10) die konfigurierbare Schwelle übersteigt, mit der er verglichen wird, die Transportsitzung im Dual-IP-Zustand (22) einrichtet.

5. Verfahren nach Anspruch 2, wobei der gemessene Qualitätsparameter der mobilen PS-Verbindung (10) vom Home-Gateway (HG) durch Versuchen eines Anruf-Setup auf der mobilen PS-Verbindung (10) und Warten auf eine Antwort, ausgewählt aus einer positiven Antwort und einer negativen Antwort, vom zellularen Telekommunikationsnetz erhalten wird.

6. Verfahren nach Anspruch 5, wobei das zellulare Telekommunikationsnetz nach dem Versuch eines Anruf-Setup auf der mobilen PS-Verbindung (10) den Anruf-Setup akzeptiert und eine positive Antwort zum Home-Gateway (HG) nur dann sendet, wenn die aktuelle Last im zellularen Telekommunikationsnetz niedriger ist als eine vorbestimmte Schwelle, die anzeigt, dass eine zweite Verbindung für das Endgerät (TE) auf der mobilen PS-Verbindung (10) des Home-Gateway (HG) zulässig ist; anderweitig so, dass ein Nutzen davon erhalten werden kann, und das zellulare Telekommunikationsnetz je nach dieser Lastbeurteilung schließlich den Anruf-Setup zurückweist und eine negative Antwort zum Home-Gateway (HG) sendet.

7. Verfahren nach einem der Ansprüche 2-6, wobei das Einrichten der Transportsitzung durch das Home-Gateway (HG) in einem Dual-IP-Zustand (22) das Aktivieren eines PDP-Kontexts mit der IP-Adresse (IP1) der mobilen PS-Verbindung (10) beinhaltet und der PDP-Kontext gleichzeitig mit der Feststellung durch den Vergleich des gemessenen Qualitätsparameters der mobilen PS-Verbindung (10) mit der konfigurierbaren Schwelle des Zuweisens von Datenverkehr zur IP-Adresse (IP1) der mobilen PS-Verbindung (10) aktiviert wird.

8. Verfahren nach einem der Ansprüche 2-6, wobei das Einrichten der Transportsitzung durch das Home-Gateway (HG) in einem Dual-IP-Zustand (22) das periodische Aktivieren eines PDP-Kontexts mit der IP-Adresse (IP1) der mobilen PS-Verbindung (10) beinhaltet und der PDP-Kontext vor der Bestimmung durch den Vergleich des gemessenen Qualitätsparameters der mobilen PS-Verbindung (10) mit der konfigurierbaren Schwelle des Zuweisens von Datenverkehr zu der IP-Adresse (IP1) der mobilen PS-Verbindung (10) aktiviert wird.

9. Verfahren nach einem der Ansprüche 2-6, wobei das Einrichten der Transportsitzung durch das Home-Gateway (HG) in einem Dual-IP-Zustand (22) das Anfordern eines Funkträgers zum Führen von Datenverkehr mit der IP-Adresse (IP1) der mobilen PS-Verbindung (10) beim Bestimmen durch den Vergleich des gemessenen Qualitätsparameters der mobilen PS-Verbindung (10) mit der konfigurierbaren Schwelle, dass Datenverkehr der IP-Adresse (IP1) der mobilen PS-Verbindung (10) zugewiesen wird, und immer Offenhalten eines aktivierten PDP-Kontexts beinhaltet.

10. Verfahren nach einem der Ansprüche 2-9, wobei, wenn der IP-Adresse (IP1) der mobilen PS-Verbindung (10) Datenverkehr zugewiesen ist und der IP-Adresse (IP2) der DLS-Verbindung (11) Datenverkehr zugewiesen ist, wenigstens ein Teil des der IP-Adresse (IP2) der DLS-Verbindung (11) zugewiesenen Datenverkehrs der IP-Adresse (IP1) der mobilen PS-Verbindung (10) je nach einem Vergleich der gemessenen Qualitätsparameter der DSL-Verbindung (11) und der mobilen PS-Verbindung (10) mit einer konfigurierten Mindestschwelle neu zugeweisen wird.

11. Verfahren nach einem der Ansprüche 2-10, wobei, wenn der IP-Adresse (IP1) der mobilen PS-Verbindung (10) Datenverkehr zugewiesen ist, der Datenverkehr einem niedrigen Prioritätsparameter von QoS zugewiesen wird, der von dem zellularen Telekommunikationsnetz benutzt wird.

12. Verfahren nach einem der Ansprüche 2-11, wobei, wenn der IP-Adresse (IP1) der mobilen PS-Verbindung (10) kein Datenverkehr zugewiesen wird und der mobilen PS-Verbindung (10) Funkträger zugewiesen werden, das Einrichten der Transportsitzung durch das Home-Gateway (HG) das Freigeben der Funkträger und das Zurückversetzen des Home-Gateway (HG) in den Einzel-IP-Zustand (20) beinhaltet.

13. Verfahren nach einem vorherigen Anspruch, wobei der gemessene Qualitätsparameter der DSL-Verbindung (11) eine DSL-Auslastung ist, die ein Verhältnis zwischen einem gemessenen aktuellen Durchsatz der DSL-Verbindung (11) gegenüber einem maximal zulässigen Durchsatz der DSL-Verbindung (11) ist.

14. Verfahren nach einem der Ansprüche 1-12, wobei der gemessene Qualitätsparameter der DSL-Verbindung (11) eine DSL-Latenz ist.

15. Gateway-Gerät zum Zuweisen von Datenverkehr zu Weitverkehrsnetzen, das Folgendes umfasst:
- Verbindungsmittel zum Verbinden mit wenigstens einem Endgerät (TE),
- Verbindungsmittel zum Verbinden mit einem DSL-Netz (PDN),
- Verbindungsmittel zum Verbinden mit einem zellularen Telekommunikationsnetz,
**dadurch gekennzeichnet, dass** es ferner Folgendes umfasst:
- Verarbeitungsmittel, konfiguriert zum Ausführen des Verfahrens zum Zuweisen von Datenverkehr gemäß Definition in einem vorherigen Anspruch.

## Revendications

1. Procédé d'affectation du trafic d'équipement terminal (TE) connecté à une passerelle domestique (HG), comprenant les opérations consistant à :
- connecter la passerelle domestique (HG) à un réseau DSL par l'intermédiaire d'une connexion DSL (11) avec une adresse IP (IP2),
- configurer la passerelle domestique (HG) dans un état initial qui est un état IP unique (20) auquel l'adresse IP (IP2) de la connexion DSL (11) est la seule disponible pour l'affectation du trafic,
- connecter la passerelle domestique (HG) à un réseau de télécommunications cellulaire par l'intermédiaire d'une connexion PS mobile (10) avec une adresse IP (IP1) laquelle est différente de l'adresse IP (IP2) de la connexion DSL (11),
- mesurer un paramètre de qualité de la connexion DSL (11) à la fois en liaison montante et en liaison descendante lorsqu'une requête de session de transport arrive au niveau de la passerelle domestique (HG),
- mesurer un paramètre de qualité de la connexion PS mobile (10),
- déterminer si la passerelle domestique (HG) établit la session de transport dans l'état IP unique (20) ou dans un état IP double (22), l'état IP double étant un état dans lequel l'adresse IP (IP1) de la connexion PS mobile (10) et l'adresse IP (IP2) de la connexion DSL (11) sont toutes deux disponibles pour une affectation de trafic et dans lequel le trafic est affecté aux deux adresses IP disponibles (IP1, IP2), au moins une partie du trafic affecté à IP2 étant ré-affectée depuis la connexion DSL vers l'IPI de la connexion PS mobile,
ladite étape de détermination incluant l'opération consistant à comparer le paramètre de qualité mesuré de la connexion DSL avec un premier seuil, et à comparer la connexion PS mobile avec un deuxième seuil et à commuter vers l'état IP double si les paramètres de qualité mesurés se situent en dessous de leurs seuils respectifs.

2. Procédé selon la revendication 1, comprenant en outre :
l'étape de détermination incluant en outre l'affectation du trafic à l'état IP unique où le paramètre de qualité mesuré de la connexion PS mobile se situe au-dessus du deuxième seuil.

3. Procédé selon la revendication 2, le paramètre de qualité mesuré de la connexion PS mobile (10) étant une valeur de charge obtenue par la passerelle domestique (HG) grâce à la mesure d'une puissance reçue en liaison descendante et à la détermination de valeurs de puissance maximum et minimum en liaison descendante reçues dans un intervalle de temps antérieur qui est configurable, et si le paramètre de qualité mesuré de la connexion PS mobile (10) se situe en dessous du seuil configurable auquel il est comparé, la passerelle domestique (HG) établit la session de transport à l'état IP double (22).

4. Procédé selon la revendication 2, le paramètre de qualité mesuré de la connexion PS mobile (10) étant une valeur de débit obtenue par la passerelle domestique (HG) grâce à l'initialisation d'un service FTP sur la connexion PS mobile (10) et à la mesure d'une vitesse de téléchargement moyenne dans un intervalle de temps qui est configurable, et si le paramètre de qualité mesuré de la connexion PS mobile (10) dépasse le seuil configurable auquel il est comparé, la passerelle domestique (HG) établit la session de transport à l'état IP double (22).

5. Procédé selon la revendication 2, le paramètre de qualité mesuré de la connexion PS mobile (10) étant obtenu par la passerelle domestique (HG) grâce à la tentative d'une initialisation d'appel sur la connexion PS mobile (10) et à l'attente d'une réponse, sélectionnée parmi une réponse positive et une réponse négative, en provenance du réseau de télécommunications cellulaire.

6. Procédé selon la revendication 5, après la tentative d'une initialisation d'appel sur la connexion PS mobile (10), le réseau de télécommunications cellulaire acceptant l'initialisation d'appel et envoyant une réponse positive à la passerelle domestique (HG) uniquement si la charge actuelle dans le réseau de télécommunications cellulaire est inférieur à un seuil déterminé indiquant qu'une deuxième connexion pour l'équipement terminal (TE) sur la connexion PS mobile (10) de la passerelle domestique (HG) est autorisable ; sinon, pour pouvoir en retirer un bénéfice et, en dépendance de cette évaluation de charge, finalement le réseau de télécommunications cellulaire rejetant l'initialisation d'appel et envoyant une réponse négative à la passerelle domestique (HG).

7. Procédé selon l'une quelconque des revendications 2 à 6, l'établissement de la session de transport par la passerelle domestique (HG) à un état IP double (22) comprenant l'activation d'un contexte PDP avec l'adresse IP (IP1) de la connexion PS mobile (10) et le contexte PDP étant activé simultanément à la détermination en vertu de la comparaison du paramètre de qualité mesuré de la connexion PS mobile (10) avec le seuil configurable d'affectation de trafic à l'adresse IP (IP1) de la connexion PS mobile (10).

8. Procédé selon l'une quelconque des revendications 2 à 6, l'établissement de la session de transport par la passerelle domestique (HG) à un état IP double (22) comprenant l'activation à des intervalles périodiques d'un contexte PDP avec l'adresse IP (IP1) de la connexion PS mobile (10), et le contexte PDP étant activé avant la détermination en vertu de la comparaison du paramètre de qualité mesuré de la connexion PS mobile (10) avec le seuil configurable de l'affectation de trafic à l'adresse IP (IP1) de la connexion PS mobile (10).

9. Procédé selon l'une quelconque des revendications 2 à 6, l'établissement de la session de transport par la passerelle domestique (HG) à un état IP double (22) comprenant la requête d'une porteuse radio pour acheminer le trafic avec l'adresse IP (IP1) de la connexion PS mobile (10) lors de la détermination en vertu de la comparaison du paramètre de qualité mesuré de la connexion PS mobile (10) avec le seuil configurable que le trafic est affecté à l'adresse IP (IP1) de la connexion PS mobile (10) et ayant un contexte PDP activé qui est toujours ouvert.

10. Procédé selon l'une quelconque des revendications 2 à 9, si du trafic est affecté à l'adresse IP (IP1) de la connexion PS mobile (10) et du trafic est affecté à l'adresse IP (IP2) de la connexion DLS (11), au moins une partie du trafic affecté à l'adresse IP (IP2) de la connexion DLS (11) étant ré-affectée à l'adresse IP (IP1) de la connexion PS mobile (10) en dépendance d'une comparaison des paramètres de qualité mesurés de la connexion DSL (11) et de la connexion PS mobile (10) avec un seuil minimum configuré.

11. Procédé selon l'une quelconque des revendications 2 à 10, si du trafic est affecté à l'adresse IP (IP1) de la connexion PS mobile (10), un paramètre QoS de faible priorité utilisé par le réseau de télécommunications cellulaire étant attribué à ce trafic.

12. Procédé selon l'une quelconque des revendications 2 à 11, si aucun trafic n'est affecté à l'adresse IP (IP1) de la connexion PS mobile (10) et que des porteuses radio sont affectées à la connexion PS mobile (10), l'établissement de la session de transport par la passerelle domestique (HG) comprenant les opérations consistant à libérer les porteuses radio et à faire revenir la passerelle domestique (HG) à un état IP unique (20).

13. Procédé selon l'une quelconque des revendications précédentes, le paramètre de qualité mesuré de la connexion DSL (11) étant une utilisation de la charge DSL qui est un rapport entre un débit actuel mesuré de la connexion DSL (11) et un débit maximum atteignable de la connexion DSL (11).

14. Procédé selon l'une quelconque des revendications 1 à 12, le paramètre de qualité mesuré de la connexion DSL (11) étant une latence DSL.

15. Dispositif passerelle pour affecter le trafic dans des réseaux étendus, comprenant :
- des moyens de connexion pour assurer une connexion vers au moins un équipement terminal (TE),
- des moyens de connexion pour assurer une connexion vers un réseau DSL (PDN),
- des moyens de connexion pour assurer une connexion vers un réseau de télécommunications cellulaire,
**caractérisé par le fait qu'**il comprend en outre :
- des moyens de traitement configurés de façon à réaliser le procédé pour affecter le trafic défini en conformité avec l'une quelconque des revendications précédentes.
